# EUROPEAN PATENT SPECIFICATION

(11) **EP 3 546 189 B1**
(45) Date of publication and mention of the grant of the patent: **08.09.2021**
(21) Application number: 19163671.1
(22) Date of filing: 19.03.2019
(51) Int. Cl.: B29C 45/83, B29C 45/84, B29C 45/66

(54) **INJECTION MOLDING MACHINE**
SPRITZGIESSMASCHINE
MACHINE DE MOULAGE À INJECTION

(30) Priority: 30.03.2018 JP 2018068781
(43) Date of publication of application: 02.10.2019
(73) Proprietor: Sumitomo Heavy Industries, Ltd., Tokyo 141-6025 (JP)
(72) Inventor: SEIKE, Kouji, Chiba-shi, Chiba, 263-0001, (JP); ZHANG, Xin, Kanagawa, 237-8555, (JP)
(74) Representative: Walcher, Armin

(56) References cited:
- WO-A1-2005/077639
- AT-A4- 509 983
- JP-A- 2003 211 512

## Description

### BACKGROUND OF THE INVENTION

### Field of the Invention

The present invention relates to an injection molding machine.

### Description of Related Art

An injection molding machine which opens or close a mold and clamps the mold using a toggle link mechanism is known. The toggle link mechanism is connected by a link and a connection 15 pin and a bush is installed between the link and the connection pin. However, if the mold is repeatedly opened and closed, the bush and the connection pin slide each other, and the bush is worn.

Accordingly, a method is known, in which a lubricant such as oil is interposed between the bush and the connection pin so as to increase lubricity of a sliding surface, and wear of the bush decreases (US Patent Application Publication No. 2,299,119). International Patent Application WO 2005/077639 A1 discloses a mold closing unit of an injection molding machine comprising lever joints and a lubricant supply and use of the lubricating device. Austrian Patent Application AT 509 983 A4 discloses a lubricating device for an injection molding machine with a container for lubricant, a supply line for lubricant from the container to a lubrication point of the injection molding machine, a discharge line for lubricant from the lubrication point, and a supply amount measuring device for lubricant in the supply line. Japanese Patent Application JP 2003 211512 A cooling apparatus for injection molding machine to increase a heat rated output of a drive part.

### SUMMARY OF THE INVENTION

Meanwhile, US Patent Application Publication No. 2, 299, 119 discloses a structure without a seal, in which a lubricant is sucked together with air. Accordingly, if a clogging is generated in a flow path of the air or a suction pump fails, and thus, a force for sucking the air is weakened or is stopped, there is a concern that the lubricant leaks to the outside. If the lubricant leaks to the outside, there is a concern that a device is contaminated or the lubricant adheres to a molding product.

Accordingly, an object of the present invention is to provide an injection molding machine which prevents leakage of the lubricant.

According to an aspect of an embodiment, there is provided an injection molding machine including: a movable platen; a rear platen; a link mechanism which has a plurality of links, one end connected to the movable platen, and the other end connected to the rear platen; a lubricant supply device which supplies a lubricant to at least one connection portion of a connection portion which connects the movable platen and the link to each other, a connection portion which connects the links to each other, and a connection portion which connects the rear platen and the link to each other; and a control unit which controls the lubricant supply device, in which at least one connection portion of the connection portions includes a bush, a connection pin which is inserted into the bush, a supply path through which a lubricant is supplied to a bearing clearance which is a clearance between the bush and the connection pin, and a discharge path through which the lubricant is discharged from the bearing clearance, and the lubricant supply device includes a supply mechanism which is connected to the supply path and supplies the lubricant, and a discharge mechanism including a recovery pump, the discharge mechanism being connected to the discharge path and discharging the lubricant, and the control unit includes a detection unit which detects an operation state of the discharge mechanism and a suction state of air performed by the recovery pump, and a determination unit which determines whether or not to operate the supply mechanism based on a detection result of the detection unit.

According to the present invention, it is possible to provide the injection molding machine which prevents leakage of the lubricant.

### BRIEF DESCRIPTION OF THE DRAWINGS

Fig. 1 is a view showing a state when a mold opening of an injection molding machine according to the present embodiment is completed.
Fig. 2 is a view showing a state when a mold of the injection molding machine according to the present embodiment is clamped.
Fig. 3 is a configuration view of a toggle mechanism and a lubricant supply device.
Fig. 4 is a sectional view taken along line A-A of a connection portion.
Fig. 5 is a sectional schematic view explaining a lubrication structure between a connection pin and a bush in a connection portion of the present embodiment.
Fig. 6 is a diagram explaining an example of a configuration of a discharge mechanism which discharges a lubricant and air from the connection portion.
Fig. 7 is a function block diagram showing components of a control unit.
Fig. 8 is a flowchart explaining a control of the lubricant supply device.

### DETAILED DESCRIPTION OF THE INVENTION

Hereinafter, embodiments of the present invention will be described with reference to the drawings. In each drawing, the same or corresponding reference numerals are assigned to the same or corresponding configurations, and descriptions thereof are omitted.

### (Injection Molding Machine)

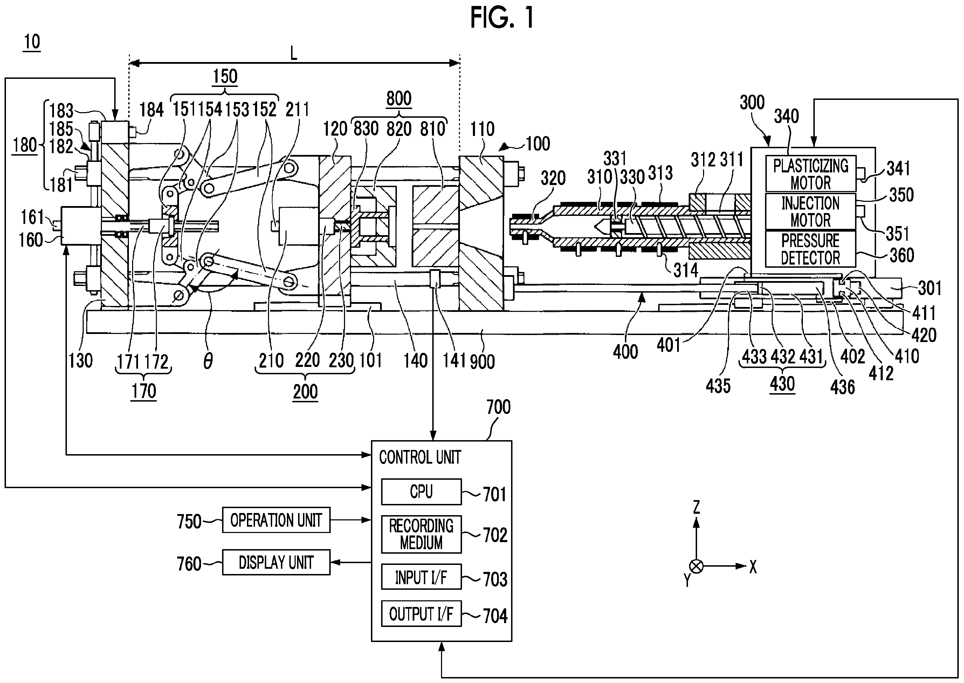

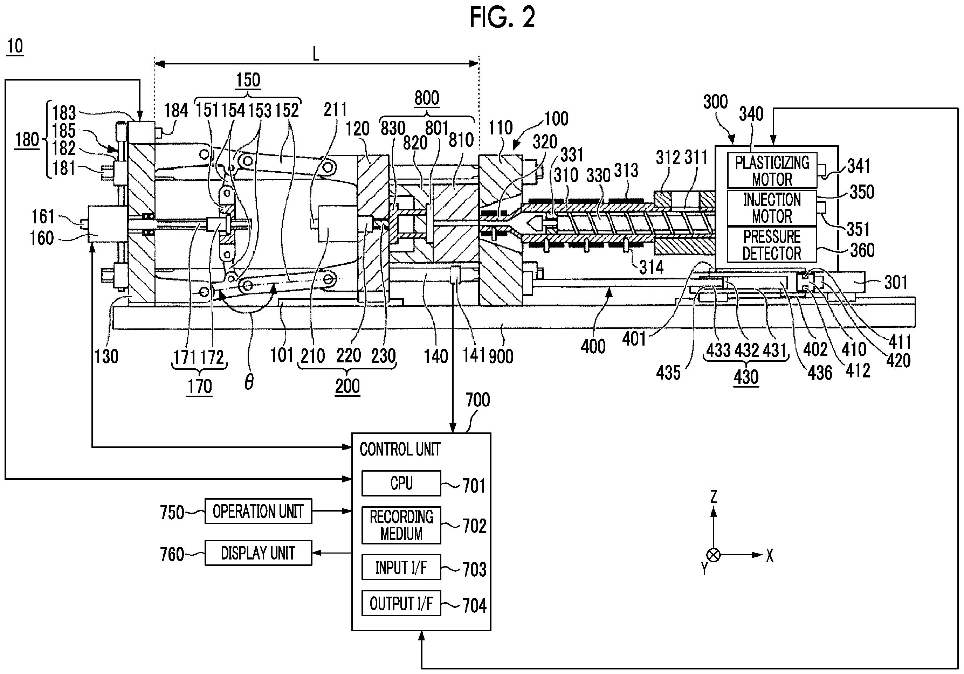

Fig. 1 is a diagram showing a state when a mold opening of an injection molding machine according to the present embodiment is completed. Fig. 2 is a diagram showing a state when a mold of the injection molding machine according to the present embodiment is clamped. In Figs. 1 and 2, an X direction, a Y direction, and a Z direction are directions perpendicular to each other. The X direction and the Y direction indicate a horizontal direction, and the Z direction indicates a vertical direction. In a case where a mold clamping unit 100 is a horizontal type mold clamping unit, the X direction is mold opening and closing directions, and the Y direction is a width direction of an injection molding machine 10. As shown in Figs. 1 and 2, the injection molding machines 10 includes the mold clamping unit 100, an ejector unit 200, an injection unit 300, a movement unit 400, a control unit 700, and a frame 900. Hereinafter, each component of the injection molding machine 10 will be described.

### (Mold Clamping Unit)

In descriptions of the mold clamping unit 100, a movement direction (right direction in Figs. 1 and 2) of a movable platen 120 when a mold is closed is defined as a front side, and a movement direction (left direction in Figs. 1 and 2) of the movable platen 120 when the mold is opened is defined as a rear side.

The mold clamping unit 100 performs closing, clamping, and opening on a mold unit 800. For example, the mold clamping unit 100 is a horizontal type clamping unit and the mold opening and closing directions are the horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame 900. A stationary mold 810 is attached to a surface of the stationary platen 110 facing the movable platen 120.

The movable platen 120 is movable in the mold opening and closing directions with respect to the frame 900. A guide 101 which guides the movable platen 120 is placed on the frame 900. A movable mold 820 is attached to a surface of the movable platen 120 facing the stationary platen 110.

The movable platen 120 moves forward or rearward with respect to the stationary platen 110, and thus, closing, clamping, and opening of the mold are performed. The mold unit 800 includes the stationary mold 810 and the movable mold 820.

The toggle support (rear platen) 130 is connected so as to be separated from the stationary platen 110, and is placed on the frame 900 to be movable in mold opening and closing directions. In addition, the toggle support 130 may be movable along a guide which is placed on the frame 900. The guide of the toggle support 130 may be also used as the guide 101 of the movable platen 120.

In addition, in the present embodiment, the stationary platen 110 is fixed to the frame 900, and the toggle support 130 is movable in the mold opening and closing directions with respect to the frame 900. However, the toggle support 130 may be fixed to the frame 900, and the stationary platen 110 may be movable in the mold opening and closing directions with respect to the frame 900.

The stationary platen 110 and the toggle support 130 are connected to each other with a gap L in the mold opening and closing directions by the tie bar 140. A plurality of (for example, four) tie bars 140 may be used. The tie bars 140 are parallel in the mold opening and closing directions and extend according to a mold clamping force. A tie bar strain detector 141 which detects strain of the tie bar 140 may be provided in at least one tie bar 140. The tie bar strain detector 141 sends a signal indicating a detection result to the control unit 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151, a pair of link groups, or the like. Each link group includes a first link 152 and a second link 153 which are bendably/strechably connected to each other by pins or the like. The first link 152 is attached to the movable platen 120 so as to be oscillated by pins or like and the second link 153 is attached to the toggle support 130 so as to be oscillated by pins or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing process, a mold clamping process, a mold opening process, or the like under the control of the control unit 700.

In the mold closing process, the mold clamping motor 160 is driven to move the crosshead 151 forward to a mold closing completion position at a set speed. Accordingly, the movable platen 120 moves forward and the movable mold 820 comes into contact with the stationary mold 810. For example, a position or speed of the crosshead 151 is detected using a mold clamping motor encoder 161 or the like. The mold clamping motor encoder 161 detects the rotation of the mold clamping motor 160 and sends a signal indicating the detection result to the control unit 700. In addition, a crosshead position detector which detects the position of the crosshead 151 and a crosshead speed detector which detects the speed of the crosshead 151 are not limited to the mold clamping motor encoder 161, and a general detector can be used. In addition, a movable platen position detector which detects the position of the movable platen 120 and a movable platen speed detector which detects the speed of the movable platen 120 are not limited to the mold clamping motor encoder 161, and a general detector can be used.

In the mold clamping process, the mold clamping motor 160 is further driven to further move the crosshead 151 forward from the mold closing completion position to a mold clamping position, and thus, a mold clamping force is generated. When the mold is clamped, a cavity space 801 (refer to Fig. 2) is formed between the movable mold 820 and the stationary mold 810, and the cavity space 801 is filled with a liquid molding material by the injection unit 300. A filled molding material is solidified, and thus, a molding product can be obtained. A plurality of cavity spaces 801 may be provided, and in this case, a plurality of molding products can be simultaneously obtained.

In the mold opening process, the mold clamping motor 160 is driven to move the crosshead 151 rearward from the mold opening start position to a mold opening completion position at a set speed. Accordingly, the movable platen 120 moves rearward, and the movable mold 820 is separated from the stationary mold 810. Thereafter, the ejector unit 200 ejects the molding product from the movable mold 820.

Setting conditions in the mold closing process and the mold clamping process are collectively set as a series of setting conditions. For example, the speed or positions (including mold closing start position, speed switching position, mold closing completion position, and mold clamping position) of the crosshead 151 and the mold clamping force in the mold closing process and the mold clamping process are collectively set as a series of setting conditions. The mold closing start position, the speed switching position, the mold closing completion position, and the mold clamping position are arranged in this order from the rear side to the front side and indicate start points and end points of sections where the speed is set. The speed is set for each section. The speed switching position may be one or more. The speed switching position may not be set. Only one of the mold clamping position and the mold clamping force may be set.

Setting conditions are similarly set in the mold opening process. For example, the speed or positions (including mold opening start position, speed switching position, and mold opening completion position) of the crosshead 151 in the mold opening process are collectively set as a series of setting conditions. The mold opening start position, the speed switching position, and the mold opening completion position are arranged in this order from the front side to the rear side and indicate start points and end points of sections where the speed is set. The speed is set for each section. The speed switching position may be one or more. The speed switching position may not be set. The mold opening start position and the mold clamping position may be the same as each other. In addition, the mold opening completion position and the mold opening/closing start position may be the same as each other.

In addition, instead of the speed, the positions, or the like of the crosshead 151, a speed, positions, or the like of the movable platen 120 may be set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 800 is changed by a change of the mold unit 800, a temperature change of the mold unit 800, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 at the time of a touch type where the movable mold 820 comes into contact with the stationary mold 810 becomes a predetermined angle.

The mold clamping unit 100 includes the mold space adjustment mechanism 180 which performs the mold space adjustment by adjusting the gap L between the stationary platen 110 and the toggle support 130. The mold space adjustment mechanism 180 includes a screw shaft 181 which is formed on a rear end portion of the tie bar 140, a screw nut 182 which is rotatably held by the toggle support 130, and a mold space adjustment motor 183 which rotates the screw nut 182 screwed to the screw shaft 181.

The screw shaft 181 and the screw nut 182 are provided for each tie bar 140. A rotation of the mold space adjustment motor 183 may be transmitted to a plurality of screw nuts 182 via a rotation transmission portion 185. The plurality of screw nuts 182 can be synchronously rotated with each other. In addition, it is possible to rotate the plurality of screw nuts 182 individually by changing a transmission path of the rotation transmission portion 185.

For example, the rotation transmission portion 185 includes a gear or the like. In this case, a driven gear is formed on an outer periphery of each screw nut 182, a drive gear is attached to an output shaft of the mold space adjustment motor 183, and an intermediate gear which engages with a plurality of driven gears and drives gears is rotatably held by a center portion of the toggle support 130. In addition, the rotation transmission portion 185 may include a belt, a pulley, or the like instead of the gear.

An operation of the mold space adjustment mechanism 180 is controlled by the control unit 700. The control unit 700 drives the mold space adjustment motor 183 to rotate the screw nut 182, and thus, the position of the toggle support 130 which rotatably holds the screw nut 182 with respect to the stationary platen 110 is adjusted, and the gap L between the stationary platen 110 and the toggle support 130 is adjusted.

In addition, in the present embodiment, the screw nut 182 may be rotatably held by the toggle support 130 and the tie bar 140 on which the screw shaft 181 is formed is fixed to the stationary platen 110. However, the present invention is not limited to this.

For example, the screw nut 182 may be rotatably held by the stationary platen 110 and the tie bar 140 may be fixed to the toggle support 130. In this case, it is possible to adjust the gap L by rotating the screw nut 182.

In addition, the screw nut 182 may be fixed to the toggle support 130 and the tie bar 140 may be held rotatably by the stationary platen 110. In this case, it is possible to adjust the gap L by rotating the tie bar 140.

In addition, the screw nut 182 maybe fixed to the stationary platen 110 and the tie bar 140 may be held rotatably by the toggle support 130. In this case, it is possible to adjust the gap L by rotating the tie bar 140.

The gap L is detected using a mold space adjustment motor encoder 184. The mold space adjustment motor encoder 184 detects a rotation amount or a rotation direction of the mold space adjustment motor 183 and sends a signal indicating a detection result to the control unit 700. The detection result of the mold space adjustment motor encoder 184 is used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

In the mold space adjustment mechanism 180, the gap L is adjusted by rotating one of the screw shaft 181 and the screw nut 182 which are screwed to each other. A plurality of the mold space adjustment mechanisms 180 may be used, and a plurality of the mold space adjustment motors 183 may be used.

In addition, in the present embodiment, the mold space adjustment mechanism 180 includes the screw shaft 181 which is formed on the tie bar 140 and the screw nut 182 which is screwed to the screw shaft 181 in order to adjust the gap L. However, the present invention is not limited to this.

For example, the mold space adjustment mechanism 180 may have a tie bar temperature controller which adjusts a temperature of the tie bar 140. The tie bar temperature controller is attached to each tie bar 140, and the temperatures of the plurality of tie bars 140 are adjusted to be in conjunction with each other. As the temperature of the tie bar 140 increases, the tie bar 140 is lengthened by thermal expansion, and thus, the gap L increases. The temperatures of the plurality of tie bars 140 can be adjusted independently.

For example, the tie bar temperature controller includes a heating unit such as a heater and adjusts the temperature of the tie bar 140 by heating. The tie bar temperature controller includes a cooler such as a water cooling jacket and may adjust the temperature of the tie bar 140 by cooling. The tie bar temperature controller may include both the heating unit and the cooler.

In addition, the mold clamping unit 100 of the present embodiment is a horizontal type mold clamping unit in which the mold opening and closing directions are the horizontal direction. However, the mold clamping unit 100 may be a vertical type mold clamping unit in which the mold opening and closing directions are the upward-downward direction. The vertical type mold clamping unit has a lower platen, an upper platen, a toggle support, a tie bar, a toggle mechanism, a mold clamping motor, or the like. One of the lower platen and the upper platen is used for a stationary platen, and the other one is used for a movable platen. A lower mold is attached to the lower platen and an upper mold is attached to the upper platen. The upper mold and the lower mold constitutes a mold unit. The lower mold may be attached to the lower platen via a rotary table. The toggle support is disposed below the lower platen and is connected to the upper platen via the tie bar. The tie bar connects the upper platen and the toggle support with a gap therebetween in the mold opening and closing directions. The toggle mechanism is disposed between the toggle support and the lower platen and lifts and lowers the movable platen. The mold clamping motor operates the toggle mechanism. In a case where the mold clamping unit is the vertical type mold clamping unit, in general, the number of the tie bars is three. In addition, the number of the tie bars is not limited to three.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### (Ejector Unit)

Similarly to the descriptions of the mold clamping unit 100, in descriptions of the ejector unit 200, the movement direction (right direction in Figs. 1 and 2) of the movable platen 120 when the mold is closed is defined as the front side, and the movement direction (left direction in Figs. 1 and 2) of the movable platen 120 when the mold is opened is defined as the rear side.

The ejector unit 200 ejects the molding product from the mold unit 800. The ejector unit 200 includes an ejector motor 210, a motion conversion mechanism 220, an ejector rod 230, or the like.

The ejector motor 210 is attached to the movable platen 120. The ejector motor 210 is directly connected to the motion conversion mechanism 220. However, the ejector motor 210 may be connected to the motion conversion mechanism 220 via a belt, a pulley, or the like.

The motion conversion mechanism 220 converts a rotary motion of the ejector motor 210 into a linear motion of the ejector rod 230. The motion conversion mechanism 220 includes a screw shaft and a screw nut which is screwed to the screw shaft. A ball or a roller may be interposed between the screw shaft and the screw nut.

The ejector rod 230 can move forward or rearward through a through-hole of the movable platen 120. A front end portion of the ejector rod 230 comes into contact with a movable member 830 which is disposed to be movable forward or rearward inside the movable mold 820. The front end portion of the ejector rod 230 may be connected to the movable member 830 or may not be connected to the movable member 830.

The ejector unit 200 performs an ejection process under the control of the control unit 700.

In the ejection process, the ejector motor 210 is driven to move the ejector rod 230 forward from a standby position to an ejection position at a set speed, and thus, the movable member 830 moves forward and the molding product is ejected. Thereafter, the ejector motor 210 is driven to move the ejector rod 230 rearward at a set speed, and thus, the movable member 830 moves rearward to an original standby position. For example, a position or speed of the ejector rod 230 is detected using an ejector motor encoder 211. The ejector motor encoder 211 detects the rotation of the ejector motor 210 and sends a signal indicating a detection result to the control unit 700. In addition, an ejector rod position detector which detects the position of the ejector rod 230 and an ejector rod speed detector which detects the speed of the ejector rod 230 are not limited to the ejector motor encoder 211, and a general detector can be used.

### (Injection Unit)

Unlike the descriptions of the mold clamping unit 100 or the descriptions of the ejector unit 200, in descriptions of the injection unit 300, a movement direction (left direction in Figs. 1 and 2) of a screw 330 during filling is referred to as a front side, and a movement direction (right direction in Figs. 1 and 2) of the screw 330 during plasticizing is referred to as a rear side.

The injection unit 300 is installed on a slide base 301 which is movable forward or rearward with respect to the frame 900, and is movable forward or rearward with respect to the mold unit 800. The injection unit 300 comes into contact with the mold unit 800, and the cavity space 801 inside the mold unit 800 is filled with the molding material by the injection unit 300. For example, the injection unit 300 includes a cylinder 310, a nozzle 320, the screw 330, a plasticizing motor 340, an injection motor 350, a pressure detector 360, or the like.

The cylinder 310 heats the molding material which is supplied from a supply port 311 to the inner portion of the cylinder 310. For example, the molding material includes a resin or the like. For example, the molding material is formed into pellets and is supplied to the supply port 311 in a solid state. The supply port 311 is formed on a rear portion of the cylinder 310. A cooler 312 such as a water cooling cylinder is provided on an outer periphery of the rear portion of the cylinder 310. A heating unit 313 such as a band heater and the temperature detector 314 are provided on an outer periphery of the cylinder 310 on a front side of the cooler 312.

The cylinder 310 is divided into a plurality of zones in an axial direction (right and left directions in Figs. 1 and 2) of the cylinder 310. The heating unit 313 and the temperature detector 314 are provided in each zone. The control unit 700 controls the heating unit 313 such that a detection temperature of the temperature detector 314 becomes a set temperature for each zone.

The nozzle 320 is provided on the front end portion of the cylinder 310 and presses the mold unit 800. The heating unit 313 and the temperature detector 314 are provided on an outer periphery of the nozzle 320. The control unit 700 controls the heating unit 313 such that a detection temperature of the nozzle 320 becomes a set temperature.

The screw 330 is disposed in the cylinder 310 so as to be rotatable and movable forward or rearward. If the screw 330 rotates, the molding material is fed forward along spiral grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 moves rearward. Thereafter, if the screw 330 moves forward, the liquid molding material accumulated in front of the screw 330 is injected from the nozzle 320 and the inside of the mold unit 800 is filled with the liquid molding material.

A backflow prevention ring 331 is attached to a front portion of the screw 330 to be movable forward or rearward as a backflow prevention valve which prevents backflow of the molding material from the front side of the screw 330 toward the rear side when the screw 330 is pushed forward.

When the screw 330 moves forward, the backflow prevention ring 331 is pushed toward the rear side by the pressure of the molding material in front of the screw 330 and moves rearward relatively to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the spiral grooves of the screw 330 and moves forward relatively to the screw 330 to an open position (refer to Fig. 1) at which the flow path of the molding material is open. Accordingly, the molding material is fed to the front side of the screw 330.

The backflow prevention ring 331 maybe either a co-rotation type ring which rotates together with the screw 330 or a non-co-rotation type ring which does not rotate together with the screw 330.

In addition, the injection unit 300 may include a drive source which moves the backflow prevention ring 331 forward or rearward with respect to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder, for example.

The pressure detector 360 detects a force transmitted between the injection motor 350 and the screw 330. The detected force is converted into a pressure by the control unit 700. The pressure detector 360 is provided on a transmission path of the force between the injection motor 350 and the screw 330 and detects the force applied to the pressure detector 360.

The pressure detector 360 sends a signal indicating a detection result to the control unit 700. The detection result of the pressure detector 360 is used to control or monitor a pressure received by the screw 330 from the molding material, a back pressure with respect to the screw 330, a pressure applied from the screw 330 to the molding material, or the like.

The injection unit 300 performs a plasticizing process, a holding pressure process, a filling process, or the like under the control of the control unit 700.

In the plasticizing process, the plasticizing motor 340 is driven to rotate the screw 330 at a set rotational speed and the molding material is fed forward along the spiral grooves of the screw 330 by the screw 330. According to this, the molding material is gradually melted. The screw 330 moves rearward as the liquid molding material is fed to the front side of the screw 330 and is accumulated in front of the cylinder 310. For example, the rotational speed of the screw 330 is detected using a plasticizing motor encoder 341. The plasticizing motor encoder 341 detects the rotation of the plasticizing motor 340 and sends a signal indicating a detection result to the control unit 700. In addition, a screw rotational speed detector which detects the rotational speed of the screw 330 is not limited to the plasticizing motor encoder 341, and a general detector may be used.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends a signal indicating a detection result to the control unit 700. If the screw 330 moves rearward to a plasticizing completion position and a predetermined amount of the molding materials is accumulated in front of the screw 330, the plasticizing process is completed.

In the filling process, the injection motor 350 is driven to move the screw 330 forward at a set speed, and the cavity space 801 inside the mold unit 800 is filled with the liquid molding material accumulated in front of the screw 330. For example, a position or speed of the screw 330 is detected using an injection motor encoder 351. The injection motor encoder 351 detects the rotation of the injection motor 350 and sends a signal indicating a detection result to the control unit 700. If the position of the screw 330 reaches a set position, switching (so called V/P switching) from the filling process to the holding pressure process is performed. The position at which the V/P switching is performed is also referred to a V/P switching position. The set speed of the screw 330 may be changed according to the position of the screw 330, the time, or the like.

In addition, in the filling process, after the position of the screw 330 reaches the set position, the screw 330 may be temporarily stopped at the set position, and thereafter, the V/P switching may be performed. Immediately before the V/P switching, instead of the screw 330 being stopped, the screw 330 may move forward or may move rearward at a very slow speed. Moreover, a screw position detector which detects the position of the screw 330 and a screw movement speed detector which detects the movement speed of the screw 330 are not limited to the injection motor encoder 351, and a general detector can be used.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 800. Insufficient molding materials can be replenished by cooling shrinkage in the mold unit 800. For example, the holding pressure is detected using the pressure detector 360. The pressure detector 360 sends a signal indicating a detection result to the control unit 700. A set value of the holding pressure may be changed according to an elapsed time from the starting of the holding pressure process, or the like.

In the holdingpressure process, the molding material inside the cavity space 801 in the mold unit 800 is gradually cooled, and when the holding pressure process is completed, an inlet of the cavity space 801 is closed by a solidified molding material. This state is referred to a gate seal and a backflow of the molding material from the cavity space 801 is prevented. A cooling process starts after the holding pressure process . In the cooling process, solidification of the molding material in the cavity space 801 is performed. In order to shorten a molding cycle time, the plasticizing process may be performed during the cooling process.

In addition, the injection unit 300 of the present embodiment is an inline and screw type injection unit. However, the injection unit 300 may be a preplasticizing type injection unit. The preplasticizing type injection unit supplies the melted molding material inside a plasticizing cylinder to an injection cylinder and injects the molding material from the injection cylinder into the mold unit. A screw is disposed to be rotatable or rotatable and movable forward or rearward in the plasticizing cylinder and a plunger is disposed to be movable forward or rearward in the injection cylinder.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is the upward-downward direction . The mold clamping unit combined with the vertical type injection unit 300 may be a vertical type mold clamping unit or a horizontal type mold clamping unit. Similarly, the mold clamping unit combined with the horizontal type injection unit 300 may be a horizontal type mold clamping unit or a vertical type mold clamping unit.

### (Movement Unit)

Similarly to the descriptions of the injection unit 300, in descriptions of the movement unit 400, the movement direction (left direction in Figs. 1 and 2) of the screw 330 during filling is referred to as a front side, and the movement direction (right direction in Figs. 1 and 2) of the screw 330 during the plasticizing is referred to as a rear side.

The movement unit 400 moves the injection unit 300 forward or rearward with respect to the mold unit 800. In addition, the movement unit 400 presses the nozzle 320 to the mold unit 800 to generate a nozzle touch pressure. The movement unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a liquid pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction corresponding to a signal from the control unit 700 and by the rotation torque corresponding to the control signal from the control unit 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which is a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 moves forward, and thus, the nozzle 320 is pressed to the stationary mold 810. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 moves rearward and thus, the nozzle 320 is separated from the stationary mold 810.

In addition, in the present embodiment, the movement unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### (Control Unit)

For example, the control unit 700 includes a computer, and as shown in Figs. 1 and 2, the control unit 700 includes a Central Processing Unit (CPU) 701, a recording medium 702 such as a memory, an input interface 703, and an output interface 704. The control unit 700 performs various controls by causing the CPU 701 to execute a program stored in the recording medium 702. In addition, the control unit 700 receives a signal from the outside through the input interface 703 and transmits a signal to the outside through the output interface 704.

The control unit 700 repeatedly performs the mold closing process, the mold clamping process, the mold opening process, or the like to repeatedly manufacture the molding product. In addition, the control unit 700 performs the plasticizing process, the filling process, the holding pressure process, or the like between the mold clamping processes. A series of operations to obtain the molding product, for example, an operation from the start of the plasticizing process to the start of the next plasticizing process is also referred to as a "shot" or a "molding cycle". In addition, a time required for once shot is also referred to as a "molding cycle time".

For example, the once molding cycle includes the plasticizing process, the mold closing process, the mold clamping process, the filling process, the holding pressure process, the cooling process, the mold opening process, and the ejection process in this order. Here, this order is an order of the start of each process. The filling process, the holding pressure process, and the cooling process are performed between the start of the mold clamping process to the end of the mold clamping process. The end of the mold clamping process coincides with the start of the mold opening process. In addition, in order to shorten the molding cycle time, the plurality of processes may be simultaneously performed. For example, the plasticizing process maybe performed during the cooling process of the previous molding cycle, and in this case, the mold closing process may be performed at an initial stage of the molding cycle . In addition, the filling process may start during the mold closing process. Moreover, the ejection process may be started during the mold opening process. In a case where an on/off valve for opening or closing a flow path of the nozzle 320, the mold opening process may be started during the plasticizing process. Accordingly, even when the mold opening process is started during the plasticizing process, the molding material does not leak from the nozzle 320 if the on/off valve closes the flow path of the nozzle 320.

The control unit 700 is connected to an operation unit 750 or a display unit 760. The operation unit 750 receives an input operation from a user and outputs a signal corresponding to the input operation to the control unit 700. The display unit 760 displays an operation screen corresponding to the input operation in the operation unit 750, under the control of the control unit 700.

The operation screen is used for the setting of the injection molding machine 10 or the like. A plurality of operation screens are provided, and thus, are displayed to be switched or to overlap each other. The user operates the operation unit 750 while viewing the operation screen displayed on the display unit 760 to perform the setting (including an input of a set value) of the injection molding machine 10 or the like.

For example, the operation unit 750 and the display unit 760 may be configured of a touch panel to be integrated with each other. In addition, in the present embodiment, the operation unit 750 and the display unit 760 are integrated with each other. However, the operation unit 750 and the display unit 760 may be independently provided. In addition, a plurality of operation units 750 may be provided.

### (Lubrication Configuration in Toggle Mechanism)

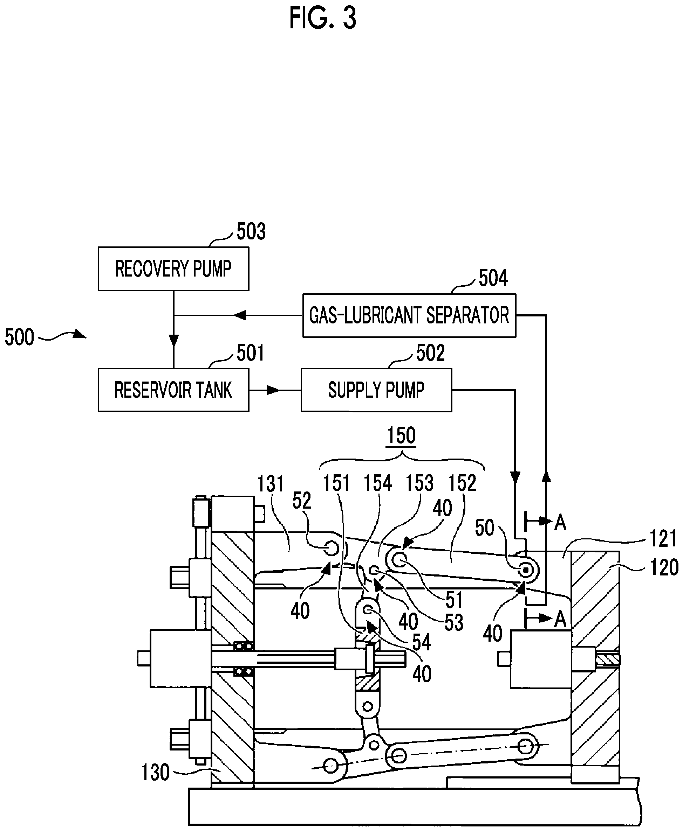

Next, a configuration of supplying a lubricant to a sliding surface of the toggle mechanism 150 will be described with reference to Fig. 3. Fig. 3 is a configuration view of the toggle mechanism 150 and a lubricant supply device 500 included in the injection molding machine 10 according to the present embodiment.

As shown in Fig. 3, a connection portion 40 which connects a bearing 121 of the movable platen 120 and the first link 152 to each other by a connection pin 50 is formed. Similarly, a connection portion 40 which connects the first link 152 and the second link 153 to each other by a connection pin 51 is formed. A connection portion 40 which connects the second link 153 and a bearing 131 of the toggle support 130 to each other by a connection pin 52 is formed. A connection portion 40 which connects the second link 153 and the third link 154 to each other by a connection pin 53 is formed. A connection portion 40 which connects the third link 154 and the crosshead 151 to each other by a connection pin 54 is formed.

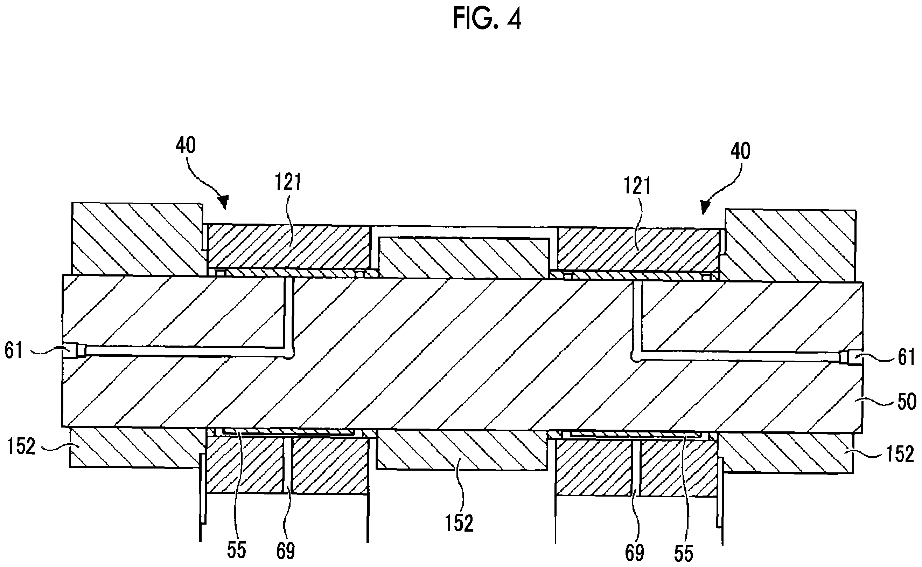

In the connection portion 40 of the connection pin 50, the connection pin 50 is detent-fixed to a bearing hole of the first link 152 which is one connection member, a bush 55 (refer to Fig. 4) is pressure-fitted into the bearing 121 of the movable platen 120 which is the other connection member, and a sliding surface between the bush 55 and the connection pin 50 is lubricated. In addition, the connection pin 50 may be detent-fixed to the bearing hole of the movable platen 120, the bush may be pressure-fitted into the bearing of the first link 152, and the sliding surface between the bush and the connection pin 50 may be lubricated. Similarly, in the connection portions 40 of the connection pins 51 to 54, the connection pins 51 and 54 may be detent-fixed to one connection member, the bushes may be pressure-fitted into the other connection member, and sliding surfaces between the bushes and the connection pins 51 and 54 may be lubricated.

In Fig. 3 and the following descriptions, a configuration of lubricating the sliding surface in the connection portion 40 of the connection pin 50 will be described as an example. The present invention may be applied to configurations of lubricating the sliding surfaces in the connection portions 40 of the other connection pins 51 to 54. In addition, the present invention may be applied to at least one connection portion of the connection portions 40.

The injection molding machine 10 includes the lubricant supply device 500. The lubricant supply device 500 has a reservoir tank 501, a supply pump 502, a recovery pump 503, and a gas-lubricant separator 504. In addition, the lubricant supply device 500 may be independently provided for each connection portion 40 or a flow path may branch off such that the lubricant supply device 500 is commonly used.

The reservoir tank 501 is a container which can store the lubricant. In addition, a type of the lubricant is not particularly limited, and for example, the lubricant may be grease or oil. The supply pump 502 supplies the lubricant from the reservoir tank 501 to supply connection ports 61 (refer to Fig. 4) of the connection portion 40.

The recovery pump 503 is connected to recovery connection ports 69 (refer to Fig. 4) of the connection portion 40 via the gas-lubricant separator 504 and recovers the lubricant by sucking air from the recovery connection ports 69. The lubricant recovered together with the air is separated into the air and the lubricant by the gas-lubricant separator 504, the separated air is sucked by the recovery pump 503, foreign substances of the separated lubricant are removed by a filter (not shown), and the lubricant is returned to the reservoir tank 501. In addition, arrows shown in the flow path of the lubricant supply device 500 indicate flow directions of the lubricant.

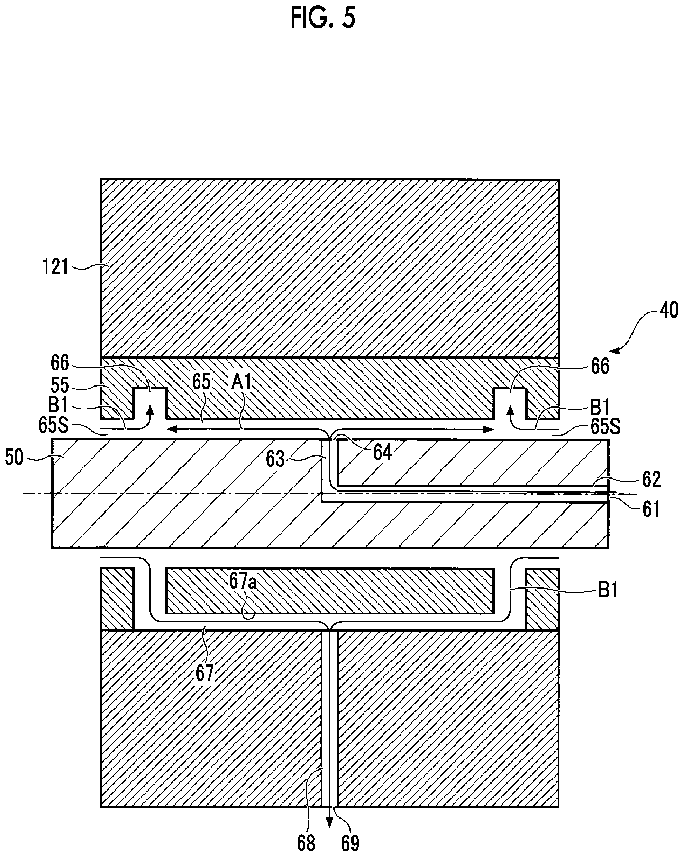

Fig. 4 is a sectional view taken along line A-A of the connection portion 40. Fig. 5 is a sectional schematic view explaining a lubrication structure between the connection pin 50 and the bush 55 in the connection portion 40 of the present embodiment. In addition, in Fig. 5, only one bush 55 of two bushes 55 in Fig. 4 and the connection pin 50 are shown, and the first link 152 is omitted. In addition, in Fig. 5, an axial direction of the connection pin 50 is a right-left direction on a paper surface. Moreover, the axial direction of the connection pin 50 is the Y direction (refer to Fig. 1).

The supply connection port 61 is provided on an end surface of the connection pin 50, and a supply path 62 extending in the axial direction of the connection pin 50 from the supply connection port 61 is provided in the connection pin 50. That is, the supply connection port 61 is provided on one end of the supply path 62. A supply path 63 extending in a radial direction of the connection pin 50 are provided on the other end side of the supply path 62, and the other end side of the supply path 63 is opened to a supply path opening portion 64 provided on an outer peripheral surface of the connection pin 50.

Collection grooves 66 which are ring-shaped grooves are formed on an inner peripheral surface of the bush 55 which is pressure-fitted into the bearing 121 of the movable platen 120. The collection grooves 66 are disposed on both outer sides such that the supply path opening portions 64 are interposed therebetween in the axial direction of the connection pin 50.

The bearing clearance 65 through which the lubricant is supplied is formed between the inner peripheral surface of the bush 55 and the outer peripheral surface of the connection pin 50 between the two collection grooves 66. Moreover, outer bearing clearances 65S are formed between the inner peripheral surface of the bush 55 and the outer peripheral surface of the connection pin 50 on the outside in the axial direction from the collection grooves 66.

Moreover, a recessed groove 67a which connects the two collection grooves 66 to each other is provided on an outer peripheral surface of the bush 55. The bush 55 is pressure-fitted into the bearing 121, and thus, a recovery path 67 is formed between the recessed groove 67a and an inner peripheral surface of the bearing hole of the bearing 121.

A recovery path 68 which communicates from the inner peripheral surface of the bearing hole to an outer peripheral surface thereof is provided in the bearing 121 into which the bush 55 is pressure-fitted. An inner peripheral surface side of the recovery path 68 communicates with the recovery path 67. An outer peripheral surface side of the recovery path 68 becomes the recovery connection port 69. In addition, when the bush 55 is pressure-fitted into the bearing 121, the bush 55 is pressure-fitted such that an inner peripheral surface-side opening portion of the recovery path 68 faces the recessed groove 67a of the bush 55, and the recovery path 67 and the recovery path 68 can communicate with each other.

Next, a flow of the lubricant will be described. The lubricant supplied from the supply connection port 61 by the supply pump 502 flows through the supply path 62 as shown by an arrow A1, branches off so as to flow through the supply path 63, and is supplied to the supply path opening portion 64 formed on the outer peripheral surface of the connection pin 50. In addition, the lubricant supplied from the supply path opening portions 64 flows from the supply path opening portions 64 to the collection grooves 66 through the bearing clearance 65 which is the clearance between the inner peripheral surface of the bush 55 and the outer peripheral surface of the connection pin 50, and thus, the lubricant lubricates the sliding surfaces of the bush 55 and the connection pin 50.

A pressure inside each collection groove 66 is more negative than a pressure of an external space by an operation of the recovery pump 503. Accordingly, a flow of air from the external space toward the collection groove 66 is generated in the outer bearing clearance 65S, and thus, even when a seal member or the like is not used in the outer bearing clearance 65S, it is possible to prevent the lubricant from flowing to the external space via the outer bearing clearance 65S.

In addition, as shown by arrows B1, the air flowing from the external space into the collection grooves 66 via the outer bearing clearances 65S is sucked from the recovery connection port 69 through the recovery path 67 and the recovery path 68 to the recovery pump 503 via the gas-lubricant separator 504. In addition, the lubricant flowing from the bearing clearance 65 into the collection grooves 66 flows into the gas-lubricant separator 504 from the recovery connection port 69 through the recovery path 67 and the recovery path 68 by the flows of the air shown by the arrows B1. Thereafter, foreign substances of the lubricant separated from the air by the gas-lubricant separator 504 are removed by a filter (not shown), and the lubricant is returned to the reservoir tank 501.

Moreover, the case where the supply connection port 61, the supply paths 62 and 63, and the supply path opening portion 64 are formed in the connection pin 50 is described. However, the lubricant may be supplied from a supply path opening portion, which is formed in the bearing 121 and the bush 55 and is provided on the inner peripheral surface of the bush 55, to the bearing clearance 65. In addition, the case where the collection grooves 66 are formed on the bush 55 is described. However, the collection grooves 66 may be formed on the connection pin 50.

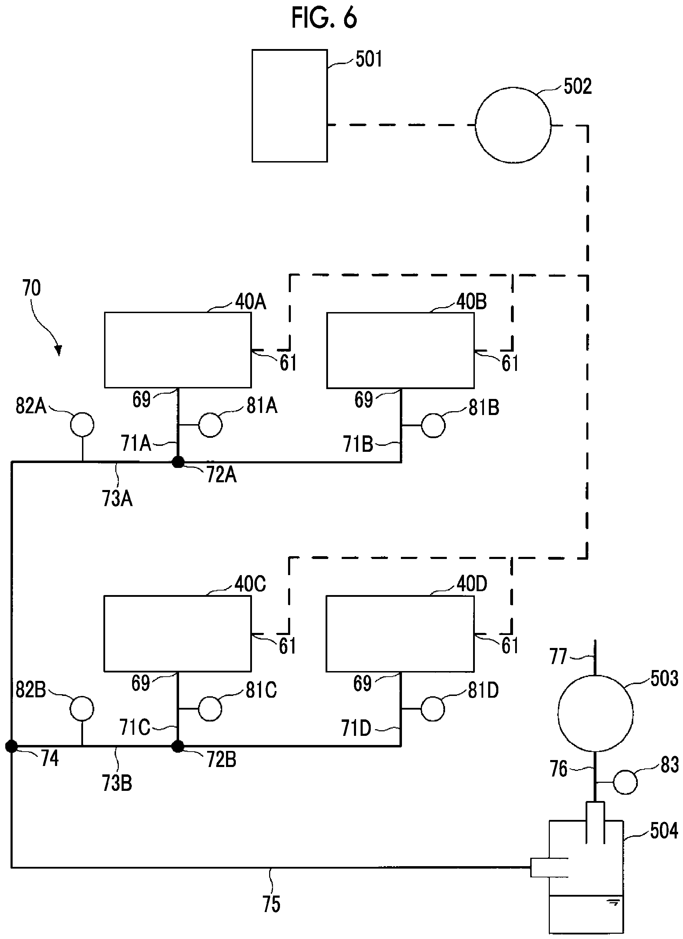

Fig. 6 is a diagram explaining an example of a configuration of a discharge mechanism 70 which discharges lubricant and the air from the connection portion. Here, a configuration in which four connection portions 40A to 40D are provided as the connection portion is described as an example. In addition, each of the connection portions 40A to 40D may be any one of the connection portions 40 of the connection pins 50 to 54 shown in Fig. 3.

The discharge mechanism 70 includes the recovery pump 503, the gas-lubricant separator 504, pipes 71A to 77 which form the flow paths, and joining portions 72A, 72B, and 74.

In the example shown in Fig. 6, the lubricant is supplied from the reservoir tank 501 to the supply connection ports 61 of the respective connection portions 40A to 40D by the supply pump 502.

Moreover, one end of the pipe 71A is connected to the recovery connection port 69 of the connection portion 40A, and the other end of the pipe 71A is connected to one supply port of the joining portion 72A. One end of the pipe 71B is connected to the recovery connection port 69 of the connection portion 40B, and the other end of the pipe 71B is connected to the other supply port of the joining portion 72A. The joining portion 72A has two supply ports and one discharge port. One end of the pipe 73A is connected to the discharge port of the joining portion 72A, and the other end of the pipe 73A is connected to one supply port of the joining portion 74.

Similarly, one end of the pipe 71C is connected to the recovery connection port 69 of the connection portion 40C, and the other end of the pipe 71C is connected to one supply port of the joining portion 72B. One end of the pipe 71D is connected to the recovery connection port 69 of the connection portion 40D, and the other end of the pipe 71D is connected to the other supply port of the joining portion 72B. The joining portion 72B has two supply ports and one discharge port. One end of the pipe 73B is connected to the discharge port of the joining portion 72B, and the other end of the pipe 73B is connected to the other supply port of the joining portion 74.

The joining portion 74 has two supply ports and one discharge port. One end of the pipe 75 is connected to the discharge port of the joining portion 74 and the other end of the pipe 75 is connected to an inlet of the gas-lubricant separator 504. One end of the pipe 76 is connected to a gas outlet of the gas-lubricant separator 504. The other end of the pipe 76 is connected to a suction port of the recovery pump 503. The pipe 77 is connected to a discharge port of the recovery pump 503.

According to this configuration, the lubricant and the air discharged from the connection portion 40A flows from the recovery connection port 69 into the gas-lubricant separator 504 through the pipe 71A, the joining portion 72A, the pipe 73A, the joining portion 74, and the pipe 75. In addition, the gas (air) and the lubricant are separated from each other by the gas-lubricant separator 504, and the separated lubricant is stored. The separated gas is sucked by the recovery pump 503 via the pipe 76, and is discharged to the outside through the pipe 77. Moreover, this is similarly applied to each of the connection portions 40B to 40D.

Meanwhile, clogging is generated in the pipe due to metal powder generated by wear of the bush 55, clogging is generated in the outer bearing clearances 65S due to dust flowing from the external space into the collection grooves 66 via the outer bearing clearances 65S, and thus, there is a concern that suction of the collection grooves 66 cannot be appropriately performed by the recovery pump 503. In addition, there is a concern that the suction of the collection grooves 66 cannot be appropriately performed by the recovery pump 503 due to damages of a connection failure of the pipe, a failure of the recovery pump 503, or the like. If the suction of the collection grooves 66 cannot be appropriately performed, the lubricant flowing from the bearing clearance 65 into the collection grooves 66 is not discharged, and there is a concern that the lubricant leaks from the outer bearing clearances 65S to the external space.

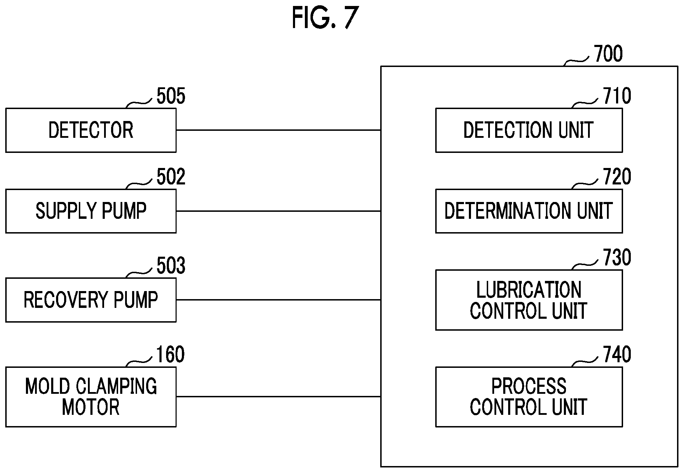

Accordingly, the injection molding machine 10 according to the present embodiment is provided with a detector 505 (refer to Fig. 7 described later) for detecting whether or not the suction in the collection grooves 66 is normally operated by the recovery pump 503

For example, a gas flow meter may be used as the detector 505 which detects suction states of the collection grooves 66 performed by the recovery pump 503. The gas flow meter is disposed on a flow path of the discharge mechanism 70, and if a measured flow rate is equal to or more than a predetermined threshold value, the gas flow meter can determine that the suction of the collection grooves 66 is normally operated by the recovery pump 503. Moreover, it is not preferable that the air containing the lubricant flows into the gas flow meter, and thus, for example, the detector is provided at a detector position 83 at which the flow rate of the gas flowing through the pipe 76 connecting the gas outlet of the gas-lubricant separator 504 and the recovery pump 503 to each other is measured. Moreover, in a case where the detector is provided in other pipes, it is preferable that the gas flow meter and lubricant separation means (not shown) are commonly used.

Moreover, a pressure gauge may be used as the detector 505. The pressure gauge is disposed to branch off from the flow path of the discharge mechanism 70.
As a flow velocity of the air flowing through the flow path increases, a value detected by the pressure gauge decreases. Accordingly, based on a detection value of the pressure gauge, it is possible to determine whether or not the suction of the lubricant in the collection grooves 66 by the recovery pump 503 is normally operated.

In addition, as the detector 505, a combination of a light emitting element and a light receiving element of laser light may be used. A window through which the laser light passes is provided in the pipe of the discharge mechanism 70, the laser light from the light emitting element provided outside the pipe traverses the flow path via the window and is incident to the light receiving element provided outside the pipe via the window. In a case where the suction of the lubricant in the collection grooves 66 by the recovery pump 503 is normally operated, the lubricant flows through the flow path, and thus, the laser light is obstructed. Accordingly, by detecting whether or not the laser light can be detected by the light receiving element, it is possible to determine whether or not the suction of the collection grooves 66 by the recovery pump 503 is normally operated.

In addition, as the detector 505, a video camera may be used. A window through which the inside of the flow path can be imaged from the outside of the pipe, the lubricant flowing through the flow path is imaged by the video camera, and thus, it is possible to determine whether or not the lubricant flows.

Next, a position at which the detector 505 is positioned and a detection range of the detector 505 will be described. For example, in a case where the detector 505 is provided in only a detector position 81A of the pipe 71A, if abnormality such as clogging is generated in any one of pipes 71A, 73A, 75, 76, and 77 and the recovery pump 503, it is possible to detect the abnormality. However, by only the detector 505 provided at the detector position 81A, it is not possible to specify at which position the abnormality such as clogging is generated. This is similarly applied to a case where the detector 505 is provided in only each of the detector positions 81A to 81D.

In a case where the detector 505 is provided in the detector position 82A of the pipe 73A, if abnormality such as clogging is generated in any one of pipes 73A, 75, 76, and 77 and the recovery pump 503, it is possible to detect the abnormality. However, by only the detector 505 provided at the detector position 82A, it is notpossible to specify at which position the abnormality such as clogging is generated. This is similarly applied to a case where the detector 505 is provided in only the detector position 82B.

Moreover, in a case where the detectors 505 are respectively provided in the detector positions 81A to 81D of the pipes 71A to 71D, if the abnormality such as the clogging is generated in any one of the pipes 71A to 71D, 73A and 73B, 75, 76, and 77, and the recovery pump 503, it is possible to detect the abnormality. In addition, by providing the detectors 505 in the detector positions 81A to 81D respectively, it is possible to specify to what extent the abnormality such as the clogging is generated at which position.

Fig. 7 is a function block diagram showing components of the control unit 700 provided in the injection molding machine 10 according to the present embodiment. In addition, each function block shown in Fig. 7 is a conceptual block, and it is not necessarily physically configured as shown in the drawings. It is possible to configure all or a portion of respective functional blocks by functionally or physically dispersing and coupling in arbitrary units . All or a portion of each processing function performed in each functional block can be realized by a program executed by the CPU or can be realized as hardware by wired logic.

The control unit 700 includes a detection unit 710, a determination unit 720, a lubrication control unit 730, and a process control unit 740. The detection unit 710 acquires a detection value of the detector 505. The determination unit 720 determines an operation state of the discharge mechanism 70 based on a detection value acquired by the detection unit 710. The lubrication control unit 730 controls operations and stopping of the supply pump 502 and the recovery pump 503. The process control unit 740 controls each portion (here, mold clamping motor 160 is exemplified) of the injection molding machine 10 along the respective process (the plasticizing process, the mold closing process, the mold clamping process, the filling process, the holding pressure process, the cooling process, the mold opening process, and the ejection process) of the molding cycle.

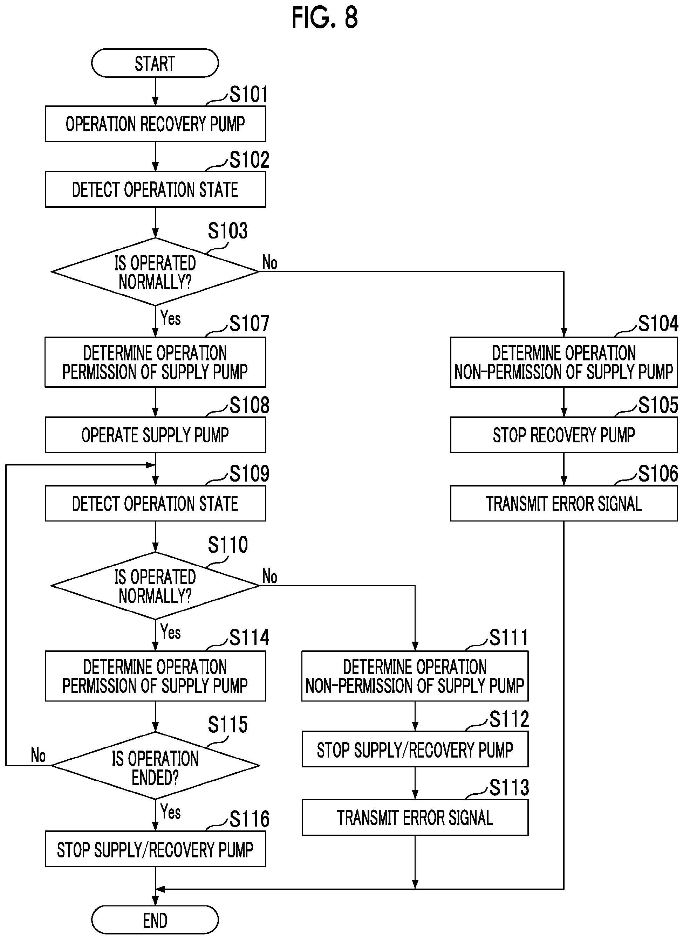

Next, a control of the lubricant supply device 500 provided in the injection molding machine 10 according to the present embodiment will be described with reference to Fig. 8. Fig. 8 is a flowchart explaining the control of the lubricant supply device 500 provided in the injection molding machine 10 according to the present embodiment.

In Step S101, the lubrication control unit 730 of the control unit 700 operates the recovery pump 503.

In Step S102, the detection unit 710 of the control unit 700 acquires the detection value related to the operation state of the discharge mechanism 70 from the detector 505. For example, in a case where the detector 505 is a flow meter, the detection unit 710 acquires a flow rate which is a detection value of the flow meter.

In Step S103, the determination unit 720 of the control unit 700 determines whether or not the discharge mechanism 70 is normally operated from the detection value acquired in Step S102. For example, in the case where the detector 505 is the flow meter, the determination unit 720 determines that the discharge mechanism 70 is normally operated when the detected flow rate is equal or more than the predetermined threshold value, and the determination unit 720 determines that the discharge mechanism 70 is not normally operated when the detected flow rate is less than the predetermined threshold value. In a case where it is determined that the discharge mechanism 70 is normally operated (Yes in S103), the processing proceeds to Step S107, and it is determined that the operation of the supply pump 502 is permitted (operation permission determination). In addition, the processing of the control unit 700 proceeds to Step S108.

Meanwhile, in a case where it is determined that the recovery pump 503 is not normally operated (No in S103), the processing proceeds to Step S104, it is determined that the operation of the supply pump 502 is not permitted (operation non-permission determination). In addition, in Step S105, the lubrication control unit 730 stops the recovery pump 503. Moreover, in Step S106, the determination unit 720 transmits an error signal indicating that lubrication is not appropriately performed and ends the processing. In addition, the error signal is issued, and thus, the control unit 700 may display this fact on the display unit 760.

In Step S108, the lubrication control unit 730 operates the supply pump 502.

In Step S109, the detection unit 710 acquires the detection value related to the operation state of the discharge mechanism 70 from the detector 505. For example, similarly to Step S102, in the case where the detector 505 is the flow meter, the detection unit 710 acquires the flow rate which is the detection value of the flow meter.

In Step S110, the determination unit 720 of the control unit 700 determines whether or not the discharge mechanism 70 is normally operated from the detection value acquired in Step S109. For example, in the case where the detector 505 is the flow meter similarly to Step S103, the determination unit 720 determines that the discharge mechanism 70 is normally operated when the detected flow rate is equal or more than the predetermined threshold value, and the determination unit 720 determines that the discharge mechanism 70 is not normally operated when the detected flow rate is less than the predetermined threshold value . In a case where it is determined that the discharge mechanism 70 is normally operated (Yes in S110), the processing proceeds to Step S114, and it is determined that the operation of the supplypump 502 is permitted (operation permission determination) . In addition, the processing of the control unit 700 proceeds to Step S115.

Meanwhile, in the case where it is determined that the recovery pump 503 is not normally operated (No in S110), the processing proceeds to Step S111, it is determined that the operation of the supply pump 502 is not permitted (operation non-permission determination). In addition, in Step S112, the lubrication control unit 730 stops the supply pump 502 and the recovery pump 503. Moreover, in Step S113, the determination unit 720 transmits an error signal indicating that lubrication is not appropriately performed and ends the processing. In addition, the error signal is issued, and thus, the control unit 700 may display this fact on the display unit 760. Moreover, the process control unit 740 may stop the mold clamping motor 160.

In Step S115, the determination unit 720 determines whether or not driving of the injection molding machine 10 ends. In a case where the driving ends (Yes in S115), the processing of the control unit 700 proceeds to Step S116. In Step S116, the lubrication control unit 730 stops the supply pump 502 and the recovery pump 503, and the processing ends.

Hereinbefore, according to the injection molding machine 10 according to the present embodiment, when the discharge mechanism 70 is not normally operated, the supply of the lubricant to the bearing clearance 65 by the supply pump 502 is stopped. Accordingly, it is possible to prevent the lubricant from overflowing from the collection grooves 66 and from flowing to the outside from the outer bearing clearances 65S. Accordingly, contamination of the device by the lubricant can be prevented, and it is possible to prevent the lubricant from adhering to the molding product.

In addition, as described in Step S101 to Step S108, it is determined whether or not the discharge mechanism 70 is normally operated before the supply pump 502 is operated, and when the discharge mechanism 70 is not normally operated, the operation of the supply pump 502 is not permitted, and thus, it is possible to prevent the lubricant flowing to outside from the outer bearing clearances 65S.

Moreover, in the example of Fig. 8, in Step S101, the recovery pump 503 is operated before the supply pump 502 is operated, and the supply pump 502 is operated after it is determined that the operation state of the discharge mechanism 70 is determined. However, the present invention is not limited to this, and the operation state may be acquired after the supply pump 502 and the recovery pump 503 are operated. That is, after the recovery pump 503 and the supply pump 502 are operated in Step S101, the processing may proceed to Step S109, and thereafter, the operation state of the discharge mechanism 70 may be determined. Accordingly, it is possible to shorten a start-up time when the injection molding machine 10 starts.

Hereinbefore, the embodiment of the injection molding machine or the like is described. However, the present invention is not limited to the above-described embodiment or the like, and various modifications and improvements can be made within the scope of the present invention described in claims.

### Brief Description of the Reference Symbols

- 10:: injection molding machine
- 100:: mold clamping unit
- 40, 40A to 40D:: connection portion
- 50 to 54:: connection pin
- 55:: bush
- 61:: supply connection port
- 62, 63:: supply path
- 64:: supply path opening portion
- 65:: bearing clearance
- 65S:: outer bearing clearance
- 66:: collection groove
- 67, 68:: recovery path (discharge path)
- 69:: recovery connection port
- 70:: discharge mechanism
- 110:: stationary platen
- 120:: movable platen
- 130:: toggle support (rear platen)
- 150:: toggle mechanism
- 151:: crosshead (link)
- 152:: first link (link)
- 153:: second link (link)
- 154:: third link (link)
- 500:: lubricant supply device
- 501:: reservoir tank
- 502:: supply pump (supply mechanism)
- 503:: recovery pump (discharge mechanism)
- 504:: gas-lubricant separator
- 505:: detector
- 700:: control unit
- 710:: detection unit
- 720:: determination unit
- 730:: lubrication control unit
- 740:: process control unit

## Claims

1. An injection molding machine (10) comprising:
a movable platen (120);
a rear platen (130);
a link mechanism (150) which has a plurality of links (151, 152, 153, 154), one end connected to the movable platen (120), and the other end connected to the rear platen (130);
a lubricant supply device (500) configured to supply a lubricant to at least one connection portion (40) of a connection portion which connects the movable platen (120) and the link (151, 152, 153, 154) to each other, a connection portion which connects the links (151, 152, 153, 154) to each other, and a connection portion which connects the rear platen (130) and the link (151, 152, 153, 154) to each other; and
a control unit (700) configured to control the lubricant supply device (500), wherein
at least one connection portion (40) of the connection portions includes
a bush (55),
a connection pin (50, 51, 52, 53, 54) which is inserted into the bush (55),
a supply path (62, 63) through which a lubricant is supplied to a bearing clearance (65) which is a clearance between the bush (55) and the connection pin (50, 51, 52, 53, 54), and
a discharge path (67, 68) through which the lubricant is discharged from the bearing clearance (65),
the lubricant supply device (500) includes
a supply mechanism (502) which is connected to the supply path (62, 63) and configured to supply the lubricant, **characterized in that** the lubricant supply device further includes
a discharge mechanism (70) including a recovery pump (503), the discharge mechanism (70) being connected to the discharge path (67, 68) and being configured to discharge the lubricant, and
the control unit (700) includes
a detection unit (710) configured to detect an operation state of the discharge mechanism (70) and a suction state of air performed by the recovery pump (503), and
a determination unit (720) configured to determine whether or not to operate the supply mechanism (502) based on a detection result of the detection unit (710).

2. The injection molding machine (10) according to claim 1,
wherein the control unit (700) is configured to stop the supply mechanism (502) in a case where the determination unit (720) determines that the discharge mechanism (70) is not normally operated.

3. The injection molding machine (10) according to claim 1 or 2,
wherein the control unit (700) is configured to operate the discharge mechanism (70) before operating the supply mechanism (502), and
wherein the control unit (700) is configured to operate the supply mechanism (502) in a case where the determination unit (720) determines that the discharge mechanism (70) is normally operated.

4. The injection molding machine (10) according to any one of claims 1 to 3,
wherein the connection portion (40) includes collection grooves (66) which are provided on both outer sides of a supply path opening portion (64) of the supply path (62, 63), which is an opening portion on the bearing clearance (65) side, in an axial direction of the connection pin (50, 51, 52, 53, 54).

## Patentansprüche

1. Spritzgießmaschine (10), umfassend:
eine bewegliche Platte (120);
eine hintere Platte (130);
einen Bindegliedmechanismus (150), der mehrere Bindeglieder (151, 152, 153, 154) aufweist, wobei ein Ende mit der beweglichen Platte (120) verbunden ist, und das andere Ende mit der hinteren Platte (130) verbunden ist;
eine Schmiermittelzufuhrvorrichtung (500), die konfiguriert ist, ein Schmiermittel an mindestens einen Verbindungsabschnitt (40) von einem Verbindungsabschnitt, welcher die bewegliche Platte (120) und das Bindeglied (151, 152, 153, 154) miteinander verbindet, und/oder einem Verbindungsabschnitt, welcher die Bindeglieder (151, 152, 153, 154) miteinander verbindet, und/oder einem Verbindungsabschnitt, welcher die hintere Platte (130) und das Bindeglied (151, 152, 153, 154) miteinander verbindet, zuzuführen; und
eine Steuereinheit (700), die konfiguriert ist, die Schmiermittelzufuhrvorrichtung (500) zu steuern, wobei zumindest ein Verbindungsabschnitt (40) der Verbindungsabschnitte umfasst:
eine Buchse (55),
einen Verbindungsstift (50, 51, 52, 53, 54), der in die Buchse (55) eingeführt ist,
einen Zuführweg (62, 63), durch den ein Schmiermittel an einen Lagerspalt (65) zugeführt wird, der ein Spalt zwischen der Buchse (55) und dem Verbindungsstift (50, 51, 52, 53, 54) ist, und
einen Ausleitungsweg (67, 68), durch den das Schmiermittel aus dem Lagerspalt (65) ausgeleitet wird,
die Schmiermittelzufuhrvorrichtung (500) umfasst:
einen Zufuhrmechanismus (502), der mit dem Zuführweg (62, 63) verbunden ist und konfiguriert ist, das Schmiermittel zuzuführen,
**dadurch gekennzeichnet, dass** die Schmiermittelzufuhrvorrichtung ferner umfasst:
einen Ausleitungsmechanismus (70), der eine Rückgewinnungspumpe (503) umfasst, wobei der Ausleitungsmechanismus (70) mit dem Ausleitungsweg (67, 68) verbunden ist und konfiguriert ist, das Schmiermittel auszuleiten, und
die Steuereinheit (700) umfasst:
eine Detektionseinheit (710), die konfiguriert ist, einen Betriebszustand des Ausleitungsmechanismus (70) und einen Ansaugzustand von Luft, der durch die Rückgewinnungspumpe (503) durchgeführt wird, zu detektieren, und
eine Bestimmungseinheit (720), die konfiguriert ist, basierend auf einem Detektionsergebnis der Detektionseinheit (710) zu bestimmen, ob der Zufuhrmechanismus (502) betätigt werden soll oder nicht.

2. Spritzgießmaschine (10) nach Anspruch 1,
wobei die Steuereinheit (700) konfiguriert ist, den Zufuhrmechanismus (502) in einem Fall zu stoppen, bei dem die Bestimmungseinheit (720) bestimmt, dass der Ausleitungsmechanismus (70) nicht normal betrieben wird.

3. Spritzgießmaschine (10) nach Anspruch 1 oder 2,
wobei die Steuereinheit (700) konfiguriert ist, den Ausleitungsmechanismus (70) vor Betätigen des Zufuhrmechanismus (502) zu betätigen, und
wobei die Steuereinheit (700) konfiguriert ist, den Zufuhrmechanismus (502) in einem Fall zu betätigen, bei dem die Bestimmungseinheit (720) bestimmt, dass der Ausleitungsmechanismus (70) normal betrieben wird.

4. Spritzgießmaschine (10) nach einem der Ansprüche 1 bis 3,
wobei der Verbindungsabschnitt (40) Sammelrinnen (66) umfasst, die an beiden Außenseiten eines Zuführweg-Öffnungsabschnitts (64) des Zuführwegs (62, 63) vorgesehen sind, welcher ein Öffnungsabschnitt auf der Seite des Lagerspalts (65) ist, in einer Axialrichtung des Verbindungsstifts (50, 51, 52, 53, 54).

## Revendications

1. Une machine de moulage par injection (10) comprenant :
un plateau mobile (120) ;
un plateau arrière (130) ;
un mécanisme de liaison (150) qui présente une pluralité de liaisons (151, 152, 153, 154), une extrémité connectée au plateau mobile (120), et l'autre extrémité connectée au plateau arrière (130) ;
un dispositif d'alimentation en lubrifiant (500) configuré de manière à fournir un lubrifiant à au moins une partie de connexion (40) d'une partie de connexion qui connecte mutuellement le plateau mobile (120) et la liaison (151, 152, 153, 154), une partie de connexion qui connecte mutuellement les liaisons (151, 152, 153, 154), et une partie de connexion qui connecte mutuellement le plateau arrière (130) et la liaison (151, 152, 153, 154) ; et
une unité de commande (700) configurée de manière à commander le dispositif d'alimentation en lubrifiant (500) ;
dans laquelle :
au moins une partie de connexion (40) des parties de connexion inclut :
une douille (55) ;
une broche de connexion (50, 51, 52, 53, 54) qui est insérée dans la douille (55) ;
un chemin d'alimentation (62, 63) à travers lequel un lubrifiant est fourni à un jeu de coussinet (65) qui est un jeu entre la douille (55) et la broche de connexion (50, 51, 52, 53, 54) ; et
un chemin de décharge (67, 68) à travers lequel le lubrifiant est déchargé du jeu de coussinet (65) ;
le dispositif d'alimentation en lubrifiant (500) inclut :
un mécanisme d'alimentation (502) qui est connecté au chemin d'alimentation (62, 63) et configuré de manière à fournir le lubrifiant ;
**caractérisée en ce que** le dispositif d'alimentation en lubrifiant inclut en outre :
un mécanisme de décharge (70) incluant une pompe de récupération (503), le mécanisme de décharge (70) étant connecté au chemin de décharge (67, 68) et étant configuré de manière à décharger le lubrifiant ; et
l'unité de commande (700) inclut :
une unité de détection (710) configurée de manière à détecter un état de fonctionnement du mécanisme de décharge (70) et un état d'aspiration d'air mis en œuvre par la pompe de récupération (503) ; et
une unité de détermination (720) configurée de manière à déterminer s'il convient ou non de faire fonctionner le mécanisme d'alimentation (502) sur la base d'un résultat de détection de l'unité de détection (710).

2. La machine de moulage par injection (10) selon la revendication 1,
dans laquelle l'unité de commande (700) est configurée de manière à arrêter le mécanisme d'alimentation (502) dans un cas où l'unité de détermination (720) détermine que le mécanisme de décharge (70) ne fonctionne pas normalement.

3. La machine de moulage par injection (10) selon la revendication 1 ou 2,
dans laquelle l'unité de commande (700) est configurée pour faire fonctionner le mécanisme de décharge (70) avant de faire fonctionner le mécanisme d'alimentation (502) ; et
dans laquelle l'unité de commande (700) est configurée pour faire fonctionner le mécanisme d'alimentation (502) dans un cas où l'unité de détermination (720) détermine que le mécanisme de décharge (70) fonctionne normalement.

4. La machine de moulage par injection (10) selon l'une quelconque des revendications 1 à 3,
dans laquelle la partie de connexion (40) inclut des rainures collectrices (66) qui sont fournies sur les deux côtés extérieurs d'une partie d'ouverture de chemin d'alimentation (64) du chemin d'alimentation (62, 63), laquelle est une partie d'ouverture sur le côté de jeu de coussinet (65), dans une direction axiale de la broche de connexion (50, 51, 52, 53, 54).
